Europäisches Patentamt

**European Patent Office**

**Office européen des brevets**

(19)

(11) Publication number: **0 016 613**

**A1**

(12) # EUROPEAN PATENT APPLICATION

(21) Application number: **80300773.1**

(22) Date of filing: **13.03.80**

(51) Int. Cl.³: **B 28 C 7/00**

(30) Priority: **14.03.79 GB 7908908**

(43) Date of publication of application:
**01.10.80 Bulletin 80/20**

(84) Designated Contracting States:
**AT BE CH DE FR IT NL SE**

(71) Applicant: **William Boulton Limited
Providence Engineering Works Navigation Road
Burslem
Stoke-on-Trent Staffordshire(GB)**

(72) Inventor: **Birks, Eric c/o William Boulton Limited
Providence Engineering Works Navigation Road
Burslem Stoke-on-Trent Staffordshire(GB)**

(74) Representative: **MacMaster, Alan Jeffrey
Swindell & Pearson 44 Friar Gate
Derby(GB)**

(54) **Method and apparatus for mixing or blending of slurries.**

(57) Apparatus for the blending of slurries comprises a blending vessel (7) into which the component slurries may be introduced in turn, means for weighing the quantity of each slurry introduced, means for sensing the volume of the slurry, comparator means operable in response to signals from the weighing means and the sensing means to generate a signal proportional to the specific gravity of the slurry, adjustment means operable in response to such signal to adjust the specific gravity of the slurry to correspond to a predetermined desired value, and means for delivering each adjusted slurry in turn to a mixing vessel. (8A, 8B, 8C)

./...

Croydon Printing Company Ltd.

EP 0 016 613 A1

Method and Apparatus for the Mixing or Blending of Slurries

The invention relates to a method and apparatus for the mixing or blending of slurries.

In the production of clayware articles a number of ingredients are mixed together to form the clay "body", the nature, number and proportions of the ingredients being varied dependent on the desired end properties of the products to be produced from the body. For purposes of ease of handling and to reduce dust the constituent materials are mixed together in slurry form, but this presents the problem that due to variations in the water content of the various slurries it becomes difficult to control accurately the dry weight of the various constituents, therefore the quality of the resultant clay body can vary to an unacceptable extent.

It is an object of the present invention to provide a method and apparatus for use in the mixing or blending of materials in which the above difficulties are obviated or mitigated.

The invention provides apparatus for the blending of slurries comprising a blending vessel into which the component slurries may be introduced in turn, means for weighing the quantity of each slurry introduced, means for sensing the volume of the slurry, comparator means operable in response to signals from said weighing means and said sensing means to generate a signal proportional to the specific gravity of the slurry, adjustment means operable in response to said signal to adjust the specific gravity of the slurry to correspond to a predetermined desired value, and means for delivering each adjusted slurry in turn to a mixing vessel.

Preferably said adjustment means is operable to effect introduction of water into each slurry in the blending vessel to vary its specific gravity. Means is preferably provided to effect shut-down of the equipment in the event of the initial specific gravity reading of any of the constituent slurries generating a comparator signal outside a predetermined range.

Preferably the apparatus includes three mixing vessels, selectively connectable to said blending vessel and selector means operable automatically to effect delivery of adjusted slurries in turn from said blending vessel to a selected empty one of said mixing vessels.

Preferably the arrangement is such that sequential batches of slurry are delivered to, mixed in and discharged from separate ones of said mixing vessels sequentially, whereby the mixing vessels become empty in sequence and are supplied with further batches of slurries from the blending vessel as they become empty.

The apparatus may include supply vessels for containing quantities of the constituents to be mixed in said blending vessel, control means being provided to enable the selection of any combination of supply vessels and the supply of the contents thereof to said blending in sequence dependent upon the desired composition of the blended product. Means may be provided to effect shut-down of the apparatus in the event of a selected supply vessel being empty or containing an inadequate supply of slurry.

The apparatus may also include means for effecting one or two stages of separation of the slurry discharged from said mixing vessels, together with storage vessels and magnetic separation equipment to effect cleaning and storage of the final slurry.

The invention also provides a method of blending slurries comprising introducing selected slurries sequentially into a blending vessel, automatically measuring the specific gravity of each slurry in turn, generating a signal in proportion to the specific gravity of the slurry,

automatically adjusting the constituents of the slurry in response
to said signal to alter the specific gravity to correspond to a control
value, and discharging the adjusted slurries in turn to a common
mixing vessel.

An embodiment of the invention will now be described, by way of
example only, with reference to the accompanying diagrammatic drawing,
which shows one form of mixing and blending apparatus according to
the invention.

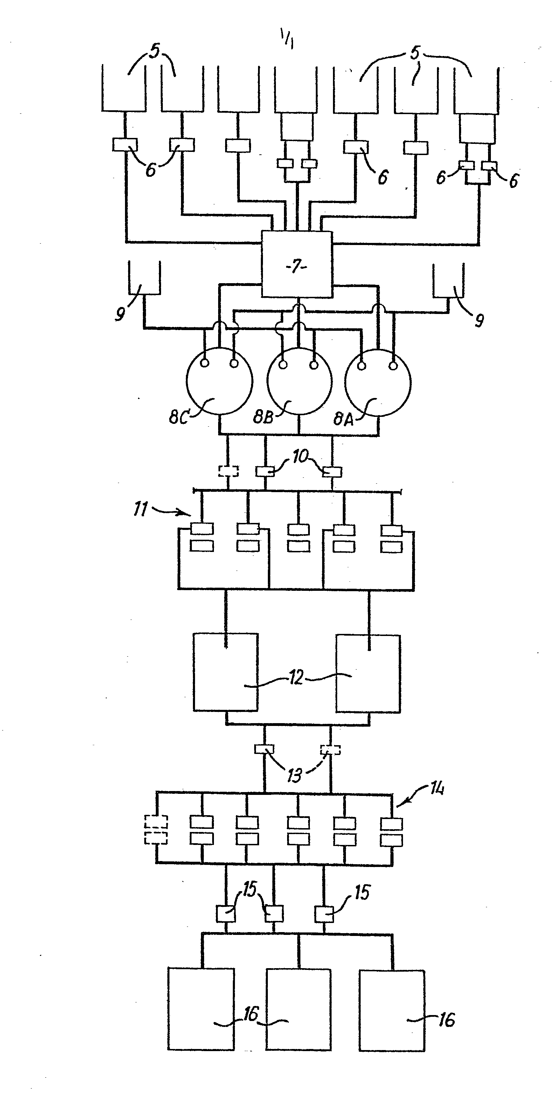

Referring to the drawing, the apparatus is designed for the
production of clay bodies for use in the manufacture of clayware
articles and comprises a series of seven supply tanks 5 each connected
by single or dual pumps 6 to a blending unit 7. Dual pumps 6 are
provided in association with those supply vessels containing constituents
which comprise a relatively large proportion of the total blend. In
such cases one pump may be switched off just prior to delivery of a
desired predetermined volume of slurry to the blending unit. In the
embodiment illustrated three of the supply vessels contain china
clay and the others contain ball clay, nepheline syenite, sand and
bone.

The blending unit 7 incorporates means for weighing the quantity
of each slurry delivered thereto from a respective supply tank and
means for sensing the volume of slurry supplied. Weighing may be
effected by supporting the blending unit on a pressure pad or other
weight-sensitive device. The volume supplied is preferably sensed by
a sonic level indicator. Signals from the weighing and level sensing
devices are fed to a comparator unit incorporated within the blending
unit which generates, in response to said signals, a control signal proportional to the specific gravity of the slurry.  This signal in turn is utilised to energise a control valve (not shown) permitting delivery of water to the blending unit to adjust the specific gravity of the slurry to a value corresponding to a predetermined control value.  In the event of the specific gravity signal being outside predetermined limits, over-ride means is provided to close down the apparatus until the error can be investigated.

Following adjustment of the specific gravity of the slurry it is discharged from the blending unit 7 to a selected one of three mixing vessels 8A, 8B and 8C.  The arrangement is such that initially slurry is discharged to mixing vessel 8A but thereafter is discharged into whichever one of the mixing vessels is empty of previous mixes. Additional constituents can also be added directly to any selected one of the mixing vessels from auxiliary supply vessels 9.  Following discharge of the slurry from the blending unit a quantity of slurry is delivered from the next supply tank 5 to the blending unit.  The weight and volume are again sensed, a specific gravity indication generated and if required water added in response to the specific gravity indication to bring the specific gravity into line with a predetermined control value for that particular slurry.  Thereafter the slurry is discharged into the same mixing vessel 8A as the previous slurry.

The procedure continues in respect of all the supply vessels 5 selected for the given mix until all the desired constituents have been delivered to the selected mixing vessel 8A, the specific gravity of each constituent having been adjusted as appropriate.  The ingredients are then mixed in the mixing vessel for a predetermined period of time during which time further constituents are being delivered to the blender unit 7, ajusted as regards their specific gravity and delivered to the mixing vessel 8B. The procedure then continues in relation to mixing vessel 8C, at which time the vessel 8A discharges its contents by way of pumps 10 to a series of separator screens 11, effecting coarse separation of the mixed slurry. The screened slurry is then delivered into one of two storage vessels 12 from which quantities can be extracted by pumps 13 and passed to a second stage screening unit 14 serving to remove further oversized particles and thereby control closely the particle size of the slurry mix. After discharge from the second stage screening unit the slurry is passed through magnetic screening devices 15 and delivered to final storage tanks 16 from which it may be removed when required for use.

In use of the apparatus in relation to the production of a body consisting, for example, of predetermined volumes of china clay, ball clay, sand and bone, level detectors associated with each of the supply tanks 5 generate a signal enabling the operating cycle to commence. If the level in any one or more of the selected supply tanks is low or the tank is empty an alarm is energised to indicate the presence of a fault and the tank in which it occurs. If all the supply tanks are sufficiently full, a predetermined quantity of china clay is first delivered from the appropriate supply tank 5 to the blending unit 7, adjusted as regards specific gravity and discharged to the mixing vessel 8A. Thereafter a predetermined quantity of ball clay is delivered from the next supply tank 5 to the blending unit 7, its specific gravity is sensed and adjusted if required and the adjusted slurry is discharged to mixing tank 8A. A similar procedure is followed in relation to sand and bone in sequence.

When sufficient constituents have been delivered to the mixing vessel 8A to cover the propeller or other mixing device, the mixing cycle is initiated and the remaining constituents required to complete the blend are added in sequence. A further blend is then produced by introducing quantities of china clay, ball clay, sand and bone in sequence through the blending unit 7 into mixing vessel 8B which then commences mixing. Thereafter a third batch is prepared by similarly testing and introducing quantities of the four constituents into the mixing vessel 8C. During this time, mixing in vessel 8A has been completed and the contents are discharged by the pumps 10 to the separating and further treatment phases.

Once mixing has commenced in tank 8C a further blend is prepared by introducing the required constituents in turn into tank 8A after adjusting the specific gravity of each constituent in the blending unit 7. During this time the contents of the mixing vessel 8B are discharged while vessel 8C continues to mix. At the next phase vessel 8A is mixed, vessel 8B is supplied, and vessel 8C discharges. The procedure can continue indefinitely for so long as it is desired to produce a body of the selected composition. The blending unit 7 is automatically washed between blending of each of the constituent slurries.

When it is desired to produce a body of a different composition the sequence of supply tanks 5 which are connected in turn to the blending unit 7 is altered accordingly and the new selection of constituents are sequentially checked and adjusted as regards their specific gravity and delivered to the mixing tanks in the same manner.

It should be appreciated that since the apparatus effects selection and specific gravity adjustment of each constituent in turn and delivers same automatically to whichever mixing vessel is empty, the entire sequence of operations can be carried out in an automated manner and as a continuous process while at the same time ensuring accurate control over the dry weight of the final mix and hence the

0016613

quality of the clay body. After mixing, screening and storage the slurry may be used in any desired manner, for example it may be dried and used for the production of articles by dust pressing or it could be used for wet pressing or other forming techniques.

Various modifications may be made without departing from the invention. For example, while in the embodiment described, three mixing tanks are provided, the invention may be applied where only one mixing tank is provided, provision of three tanks merely providing for continuity of operation. With a single tank it would be necessary to complete mixing and discharge the contents before introducing further quantities of slurry to produce the next batch. Moreover the manner in which the slurry is dealt with after mixing may vary as desired, the screening and storage arrangements described being merely one example of subsequent processing which can be applied.

It should also be appreciated that while reference has been made primarily to the mixing of clay bodies for use in pottery, the invention may be used for mixing any desired products in slurry form with accurate control over the dry weight and, by appropriate screening, particle size of the final product.

PATENT CLAIMS

1.    Apparatus for the blending of slurries comprising a blending vessel into which the component slurries may be introduced in turn, characterised by means for weighing the quantity of each slurry introduced, means for sensing the volume of the slurry, comparator means operable in response to signals from said weighing means and said sensing means to generate a signal proportional to the specific gravity of the slurry, adjustment means operable in response to said signal to adjust the specific gravity of the slurry to correspond to a predetermined desired value, and means for delivering each adjusted slurry in turn to a mixing vessel (8A, 8B, 8C).

2.    Apparatus according to claim 1 characterised in that said adjustment means is operable to effect introduction of water into each slurry in the blending vessel (7) to vary its specific gravity.

3.    Apparatus according to claim 1 or 2 characterised by means operable to effect shut-down of the equipment in the event of the initial specific gravity reading of any of the constituent slurries generating a comparator signal outside a predetermined range.

4.    Apparatus according to any preceding claim characterised by three mixing vessels (8A, 8B, 8C) selectively connectible to said blending vessel (7) and selector means operable automatically to effect delivery of adjusted slurries in turn from said blending vessel to a selected empty one of said mixing vessels.

5.      Apparatus according to claim 4 characterised in that the arrangement is such that sequential batches of slurry are delivered to, mixed in and discharged from separate ones of said mixing vessels (8A, 8B, 8C) sequentially, whereby the mixing vessels become empty in sequence and are supplied with further batches of slurries from the blending vessel (7) as they become empty.

6.      Apparatus according to any preceding claim characterised by supply vessels (5) for containing quantities of the constituents to be mixed in said blending vessel (7), control means being provided to enable the selection of any combination of supply vessels and the supply of the contents thereof to said blending vessel in sequence dependent upon the desired composition of the blended product.

7.      Apparatus according to claim 6 characterised by means operable to effect shut-down of the apparatus in the event of a selected supply vessel (5) being empty or containing an inadequate supply of slurry.

8.      Apparatus according to any preceding claim characterised by means (11) for effecting at least one stage of separation of the slurry discharged from said mixing vessels (8A, 8B, 8C) together with storage vessels (12) and magnetic separation equipment (15) to effect cleaning and storage of the final slurry.

9.      A method of blending slurries characterised by introducing selected slurries sequentially into a blending vessel (7), automatically measuring the specific gravity of each slurry in turn, generating a signal in proportion to the specific gravity of the slurry, automatically adjusting the constituents of the slurry in response to said signal to alter the specific gravity to correspond to a control value, and discharging the adjusted slurries in turn to a common mixing vessel (8A, 8B, 8C).

10.    A method according to claim 9 characterised in that said alteration of specific gravity is effected by introduction of water into each slurry in the blending vessel (7).

11.    A method according to claim 9 or 10 characterised in that sequential batches of slurry are delivered to, mixed in and discharged from separate ones of a plurality of mixing vessels (8A, 8B, 8C) sequentially, the mixing vessels being supplied in turn with further batches of slurry from the blending vessel (7) as they become empty.

12.    A method according to any of claims 9 to 11 characterised in that desired combinations of constituents are selected from a plurality of supply vessels (5) for delivery to said blending vessel (7) dependent on the desired composition of the blended product.

CC16613

| Category | Citation of document with indication, where appropriate, of relevant passages | Relevant to claim |
|---|---|---|
| A | US - A - 2 719 018 (SEBARDT) <br> * Whole document * | 1,9 |
| A | DE - A - 1 947 187 (ALTRONA) <br> * Whole document * | 1,9 |
| A | US - A - 3 074 277 (HILL) <br> * Whole document * | 1 |

**DOCUMENTS CONSIDERED TO BE RELEVANT**

CLASSIFICATION OF THE APPLICATION (Int. Cl. 3)

B 28 C 7/00

TECHNICAL FIELDS SEARCHED (Int.Cl. 3)

B 28 C
G 05 D
B 01 F

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X

The present search report has been drawn up for all claims

| Place of search | Date of completion of the search | Examiner |
|---|---|---|
| The Hague | 25-06-1980 | KUSARDY |

EPO Form 1503.1  06.78